# EUROPEAN PATENT SPECIFICATION

(11) **EP 0 909 476 B1**
(45) Date of publication and mention of the grant of the patent: **25.07.2001**
(21) Application number: 97918152.6
(22) Date of filing: 21.04.1997
(51) Int. Cl.: H02K 3/50

(54) **IMPROVEMENT IN THE STATORS FOR REFRIGERATION COMPRESSOR MOTORS**
VERBESSERUNG IM STATOR KÜHLKOMPRESSORMOTOREN
PERFECTIONNEMENT DE STATORS DE MOTEURS DE COMPRESSEURS FRIGORIFIQUES

(30) Priority: 04.07.1996 IT PN960029 U
(43) Date of publication of application: 21.04.1999
(73) Proprietor: Zanussi Elettromeccanica S.p.A., 33170 Pordenone (IT)
(72) Inventor: LANG, Rudolph, A-8380 Grieselstein (AT)
(74) Representative: Giugni, Valter
(86) International application number: EP9702010
(87) International publication number: WO9801933

(56) References cited:
- EP-A- 0 711 020
- DE-A- 3 534 883
- DE-U- 8 909 824
- DE-U- 9 113 435
- GB-A- 2 002 969
- US-A- 3 457 442
- US-A- 4 028 570
- US-A- 4 585 964

## Description

The present invention refers to a particular form of arrangement provided to accomodate, attach and connect to each other the electric leads coming from the stator of an electric motor and the respective electric wires that connect said leads with the external power-supply and control circuitry.

Although reference to a stator used in the electric motors of compressors for refrigerating apparatuses is made in the following description for reasons of illustrative convenience, it will anyway be appreciated that the present invention shall be understood to extend to also cover stators used in different applications, provided that they fall within the scope of the present invention as defined in the appended claims.

Electric compressors for refrigeration apparatuses are known in the art which use motors that in most cases are of the asynchronous single-phase type with the auxiliary winding in the circuit only during the starting period.

Motors of this type have three output leads (ie. common, main winding, secondary winding): said output leads are usually connected to said external wires by crimping or welding each one of such leads to the respective wire, wherein the so obtained connection is then protected by the application of heat-shrinking tubes.

The connection with the exterior of the sealed box occurs by means of a particular block which is attached to said sealed box and to which the external wires are connected.

Such a manufacturing technique, however, has a number of practical drawbacks, the first one of which is given by the fact that the process of crimping, protecting with a heat-shrinking tube, and accomodation of the connection in a niche to be found within the windings has to be carried out m a fully manual manner, so that it is associated with high costs and a lower quality owing to the electric leads being so easily broken. Furthermore, there is practically no possibility for automated intermediate testing to be carried out to check the so made electric contacts for continuity and this means a further falling off of the manufacturing quality and a corresponding increase in rejects at the testing stations at the end of the production lines.

A connection block is known from EP-A-711 020 to the same Applicant, which is adapted to be firmly inserted m the spaces existing between two or more pairs of electric windings and adhering against one of the stator surfaces. According to the cited utility model, said block is provided with a number of appendixes to more effectively fix said block to the windings, said block being further provided with a plurality of notches, each one of them accomodates the terminal of a lead coming from the electric windings, a respective terminal of an external power-supply wire and a related contact adapted to establish an electrical connection between the just cited respective terminals.

It has however been found experimentally that in real-life large-scale industrial production processes such a solution, albeit effective and advantageous, still has a margin for further improvement, in particular in connection with the saving effects that can be obtained in the use of material, considering that, in the cited solution, the external electric wires must be appropriately inserted in the block and it can be readily appreciated that such an operation has obviously a cost in terms of both material usage, due to the necessary extension of said wires, and additional working requirements, since the connection between a lead and the corresponding extension wire must be made manually and the connection itself must then force-fitted to sit in the mass of the winding in order to ensure an adequate resistance to accidental pulls and jerks that may be imparted to the lead or wire.

The solution is also known from the patent specification GB 2002969 to Danfoss which is based on the use of a terminal employed to serve as a connection means between the stator windings and the corresponding external leads. Such a component part, however, is not capable of being assembled with automated methods; furthermore, its fastening proves quite uncertain and unreliable as far as both positioning and stability are concerned, since the part is substantially retained only by said windings.

It would therefore be desirable, and it is actually a main purpose of the present invention, to provide a stator for refrigeration compressor motors which is capable of being manufactured in a highly automated, standardized manner, enables the afore described steps of manual processing to be eliminated while ensuring a high inherent quality of the manufacturing techniques used, and is further capable of being manufactured and assembled in a cost-effective, convenient manner with the use of materials and techniques that are readily available in the art.

Such an aim is reached in a compressor as defined in the appended claims and according to the description which is given below by way of non-limiting example with reference to the accompanying drawings, in which:
- Figures 1 and 2 are views from the top and the bottom, respectively, of a detail of the present invention;
- Figure 3 is a vertical front view of the same detail shown in the Figures above, as seen from the outside;
- Figure 4 is a vertical side cross-sectional view of the same detail as above;

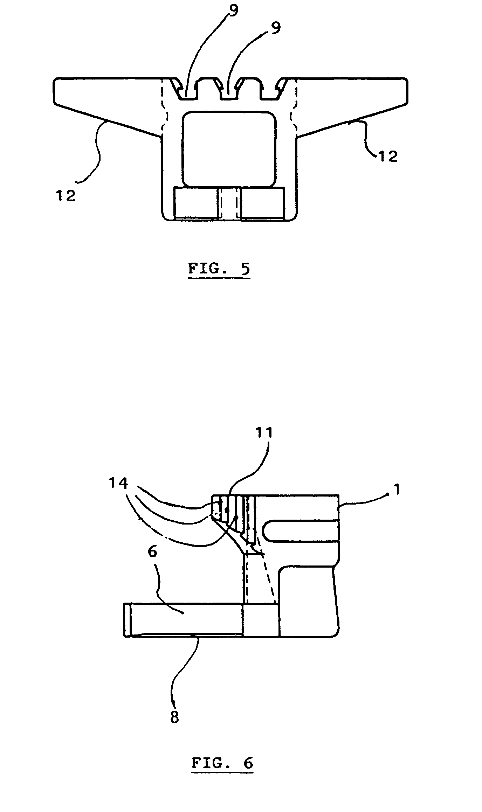

- Figure 5 is a vertical front view of the same detail shown in the Figures above, as seen from the opposite side with respect to Figure 3;
- Figure 6 is a side view of the same component part;

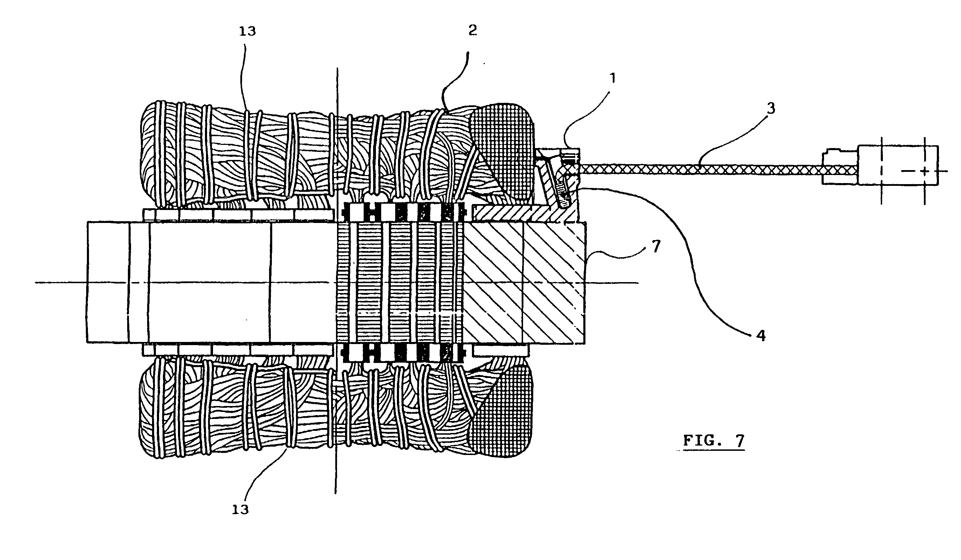

- Figure 7 is a vertical cross-sectional view of a stator according to the present invention, wherein the component part shown in the preceding Figures is sectioned as shown in Figure 4;
- Figure 8 is a view from the outside and in the center line of a stator according to the present invention:
- Figure 9 is a view from the outside and on a plane which is orthogonal to the center line and situated at an approximately median height of the stator stack according to the present invention.

The invention consists substantially of a small insulating block 1 to which both the electric wires (not shown) coming from the windings 2 and the external power-supply wires 3 are brought for connection.

In order to fulfil the desired requirements of simplicity and low cost, the stator connections are made in such a manner that the same leads coming from the respective windings are not spliced with wire extensions, but extend themselves so as to reach said connectioon block 1 directly. In order to ensure the connection with the external wires 3, the latter are joined to the respective winding leads by means of simple electric connection means, eg. by means of such a simple technique as crimping, which may also be of an unprotected type for the reasons that will be explained further on.

In order to confer stability to the whole set of such connections in general, in said connection block 1 there is provided a plurality of distinct recesses 4 which are open on a side and separated from each other by appropriate partition baffles 5, and into which said joints between the winding leads and the external wires are fitted by force. It is therefore apparent that the presence of said partition baffles 5 can make it unnecessary for the above mentioned wire joints to be electrically insulated, since said wire joints, after they have been inserted by force in their respective recesses, are automatically insulated by said baffles.

In order to determine the position of the connection block, and make it stable, the same block is provided with an appendix 6 adapted to be fitted by force into the groove forming between a pair of contiguous windings plugging into the slots of the stator stack 7.

In particular, if said appendix 6 is provided with an appropriately shaped and sized plane side 8, it can be inserted in said groove with its plane side adhering against the surface of the stator stack, so that the pressure stresses applied by the contiguous windings on said appendix are capable of holding said block firmly in a stable position.

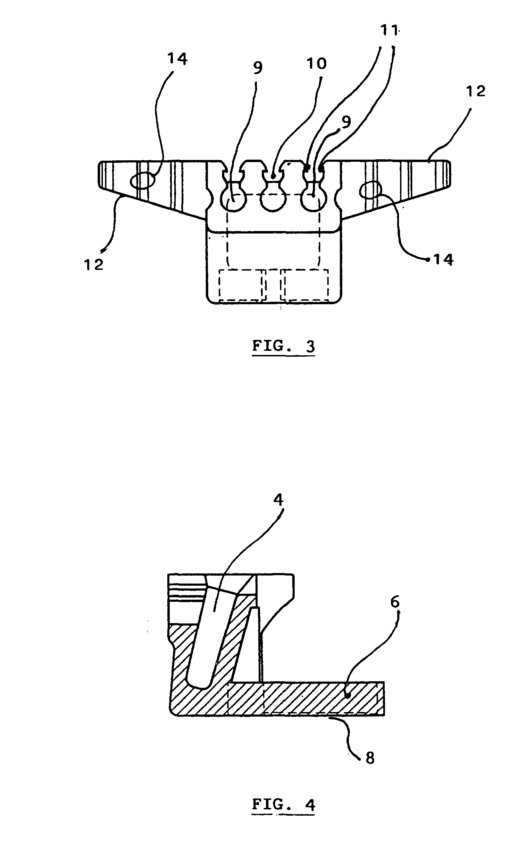

In an advantageous manner, so as to favour a firm positioning of said electric joints between winding leads and external power-supply wires, there are provided, on the edge of said recesses, respective channels 9 that are oriented so as to lead and open into the respective recesses. In the passages provided for the respective external wires to be inserted by pressure fitting, said channels 9 are provided with restrictions 11, preferably in the shape of one-way restrictions as shown in Figure 3, so that the external wire, once it has been inserted thereinto, is no longer able to come out thereof if it happens to be stressed by pulling forces, tensions or jerks applied to it up to a certain value.

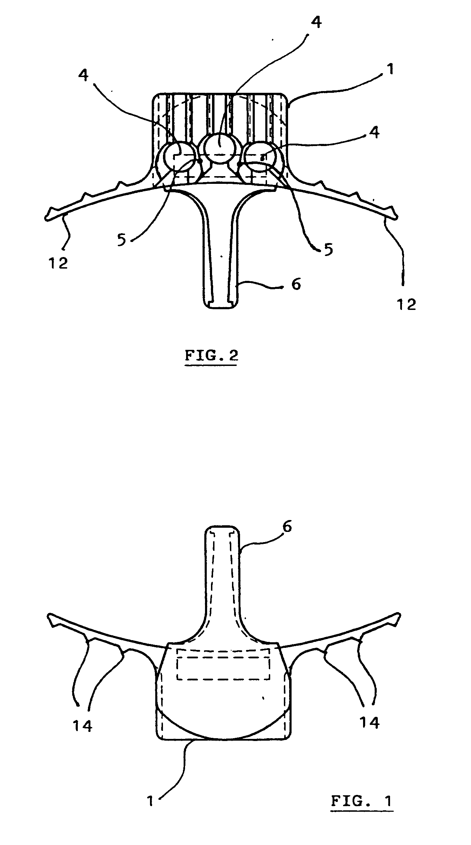

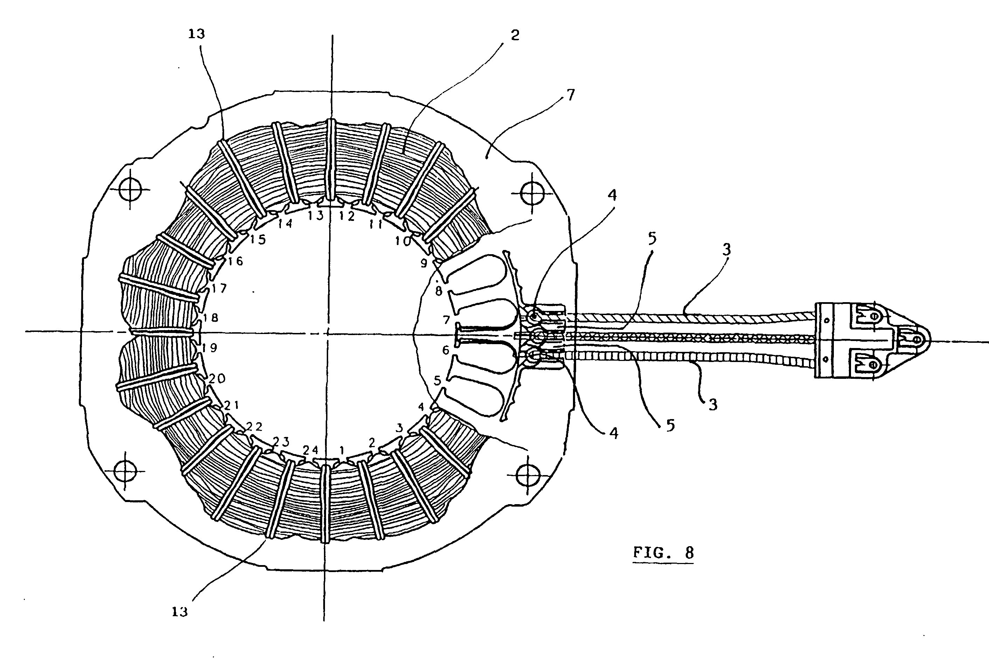

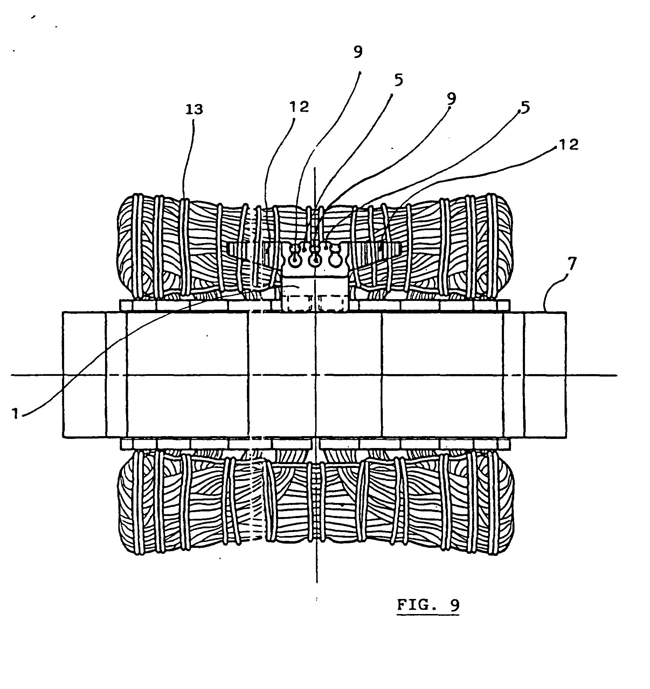

A further improvement which is effective in ensuring greater stability to the positioning of said connection block, consists in providing the same block with two side tabs 12 that are so shaped as to be able to substantially lay on the quasi-cylindrical surface of the windings, as this is shown in particular in Figures 1, 2, 8 and 9.

It will of course be appreciated that in a preferred manner said tabs are symmetrical with respect to a vertical plane passing through the center of the block, and are further positioned on the side of the block which is opposite to the side to which said appendix 6 is attached, so that the combined effect of forces and resistances exerted by the contiguous windings on both said appendix and said tabs is such as to cause the block to be held in a stable position.

In an advantageous manner, so as to definitively consolidate the position of the block, the latter is tied together with the windings by the threads 13 that are generally used to consolidate them.

Finally, in order to prevent said tying threads from being able to slip off the external surface of the tabs, the latter are so made as to be provided with reliefs 14 extending parallelly to the direction of the threads that surmount the same tabs, as this is shown in Figures 1, 2 and 3.

The presence of such reliefs, along with the fact that said tying threads are in traction, ensures the definitive stabilization of the connection block in the desired position, as well as the immovability thereof.

It will be appreciated that what has been described and illustrated above with reference to the accompanying drawings has been given merely by way of non-limiting example of the invention, and that a number of variants and modifications are possible within the scope of the appended claims.

## Claims

1. Electric compressor, in particular for household-type refrigeration appliances, comprising a stator stack, a plurality of slots, a respective plurality of electric windings (2) inserted in said slots, a respective plurality of insulating layers arranged between said slots and said electric windings, a plurality of electric leads terminating said electric widings, a small insulating block (1) being firmly attached to said stator and to which the electric leads coming from said windings arrive directly,
characterized in that:
- said small block is provided with a plurality of recesses (4) adapted to accomodate respective joints between the leads coming from said windings and corresponding external power-supply wires (3),
- said small block is further provided with a single appendix (6) that is capable of being firmly introduced in the space available between a pair of contiguous electric windings and is arranged in contact with a surface of said stator stack.

2. Compressor according to claim 1, characterized in that there are provided channels (9) which are partially open to the outside and are adapted to retain said external power-supply wires, said channels being oriented towards the respective recesses (4) accomodating said joints, so as to lead and open thereinto.

3. Compressor according to any of the preceding claims, characterized in that said appendix is provided with a plane side (8) facing the body of the stator, against which it adheres at least partially.

4. Compressor according to any of the preceding claims, characterized in that said small block is provided with two side tabs (11, 12) which are curved in the shape of an arch towards said windings and are adapted to lay upon a part of the outer surface thereof, said tabs being arranged at the opposite sides of the central body of said small block.

5. Compressor according to claim 4, characterized in that said two side tabs are provided with outwards oriented reliefs (14) that are adapted to engage the tying threads (13) wound around the coils of the windings.

6. Compressor according to claim 2 or 3 , characterized in that said side tabs are separated from the surface of said stator stack, are substantially symmetrical and arranged on the side of said small block which is opposite to the side on which said appendix (6) is in contact with said stator stack.

## Patentansprüche

1. Elektrischer Kompressor, insbesondere für Haushalts-Kühlgeräte, der ein Ständerpaket, eine Vielzahl von Schlitzen, eine entsprechende Vielzahl elektrischer Wicklungen (2), die in die Schlitze eingeführt sind, eine entsprechende Vielzahl isolierender Schichten, die zwischen den Schlitzen und den elektrischen Wicklungen angeordnet sind, eine Vielzahl elektrischer Leitungen, die die elektrischen Wicklungen abschließen, einen kleinen isolierenden Block (1), der fest an dem Ständer angebracht ist, und zu dem die elektrischen Leitungen, die von den Wicklungen ausgehen, direkt führen, umfasst,
**dadurch gekennzeichnet,** dass:
der kleine Block mit einer Vielzahl von Vertiefungen (4) versehen ist, die entsprechende Verbindungen zwischen den Leitungen, die von den Wicklungen ausgehen, und entsprechenden externen Stromversorgungsdrähten (3) aufnehmen,
der kleine Block des Weiteren mit einem einzelnen Ansatz (6) versehen ist, der fest in den Raum eingeführt werden kann, der zwischen einem Paar benachbarter elektrischer Windungen zur Verfügung steht, und in Kontakt mit einer Fläche des Ständerpakets ist.

2. Kompressor nach Anspruch 1, **dadurch gekennzeichnet,** dass Rinnen (9) vorhanden sind, die teilweise nach außen offen sind, und die die externen Stromversorgungsdrähte halten, wobei die Rinnen zu den entsprechenden Vertiefungen (4) hin gerichtet sind, die die Verbindungen aufnehmen, so dass sie in sie hineinführen und sich in sie hinein öffnen.

3. Kompressor nach einem der vorangehenden Ansprüche, **dadurch gekennzeichnet,** dass der Ansatz mit einer planen Seite (8) versehen ist, die dem Körper des Ständers zugewandt ist, an dem sie zumindest teilweise haftet.

4. Kompressor nach einem der vorangehenden Ansprüche, **dadurch gekennzeichnet,** dass der kleine Block mit zwei seitlichen Zungen (11, 12) versehen ist, die in Form eines Bogens auf die Wicklungen zu gekrümmt sind und auf einem Teil der Außenfläche derselben aufliegen, wobei die Zungen an den einander gegenüberliegenden Seiten des Mittelkörpers des kleinen Blocks angeordnet sind.

5. Kompressor nach Anspruch 4, **dadurch gekennzeichnet,** dass die zwei seitlichen Zungen mit nach außen gerichteten Profilen (14) versehen sind, die mit den Bindefäden (13) in Kontakt kommen, die um die Windungen der Wicklungen herumgewickelt sind.

6. Kompressor nach Anspruch 2 oder 3, **dadurch gekennzeichnet,** dass die seitlichen Zungen von der Oberfläche des Ständerpakets getrennt sind, im Wesentlichen symmetrisch sind und auf der Seite des kleinen Blocks angeordnet sind, die der Seite gegenüberliegt, an der der Ansatz (6) mit dem Ständerpaket in Kontakt ist.

## Revendications

1. Compresseur électrique, en particulier pour des appareils de réfrigération du type domestique, comprenant un stator à éléments superposés, une pluralité de fentes, une pluralité respective d'enroulements électriques (2) insérés dans lesdites fentes, une pluralité respective de couches isolantes agencées entre lesdites fentes et lesdits enroulements électriques, une pluralité de conducteurs électriques terminant lesdits enroulements électriques, un petit bloc isolant (1) étant solidement fixé audit stator et sur lequel les conducteurs électriques provenant desdits enroulements arrivent directement,
caractérisé en ce que :
- ledit petit bloc est muni d'une pluralité de parties en retrait (4) conçues pour loger des joints respectifs entre les conducteurs provenant desdits enroulements et des fils externes d'alimentation en courant correspondants (3),
- ledit petit bloc est muni en outre d'un unique appendice (6) qui est susceptible d'être fermement introduit dans l'espace disponible entre un couple d'enroulements électriques contigus et est agencé en contact avec une surface dudit stator à éléments superposés.

2. Compresseur selon la revendication 1, caractérisé en ce que des canaux (9) sont prévus, lesquels sont partiellement ouverts sur l'extérieur et sont concus pour retenir lesdits fils externes d'alimentation en courant, lesdits canaux étant orientés vers les parties en retrait respectives (4) logeant lesdits joints, de façon à conduire et à s'ouvrir dans ces derniers.

3. Compresseur selon l'une quelconque des revendications précédentes, caractérisé en ce que ledit appendice est muni d'une face plane (8) faisant face au corps du stator, contre lequel il adhère au moins partiellement.

4. Compresseur selon l'une quelconque des revendications précédentes, caractérisé en ce que ledit petit bloc est muni de deux languettes latérales (11, 12) qui sont incurvées selon la forme d'un arc vers lesdits enroulements et qui sont conçues pour reposer sur une partie de la surface extérieure de ces derniers, lesdites languettes étant agencées au niveau des côtés opposés du corps central dudit petit bloc.

5. Compresseur selon la revendication 4, caractérisé en ce que lesdites deux languettes latérales sont munies de parties en relief (14) orientées vers l'extérieur qui sont conçues pour être en prise avec les fils de fixation (13) enroulés autour des bobines des enroulements.

6. Compresseur selon la revendication 2 ou 3, caractérisé en ce que lesdites languettes latérales sont séparées de la surface dudit stator à éléments superposés, sont sensiblement symétriques et agencées sur le côté dudit petit bloc qui est opposé au côté sur lequel ledit appendice (6) est en contact avec ledit stator à éléments superposés.
